# FASCICULE DE BREVET EUROPEEN

(11) **EP 3 093 462 B1**
(45) Date de publication et mention de la délivrance du brevet: **22.11.2017**
(21) Numéro de dépôt: 16165474.4
(22) Date de dépôt: 15.04.2016
(51) Int. Cl.: F01N 3/20, F01N 9/00, F01N 11/00

(54) **PROCÉDÉ ET DISPOSITIF DE PROTECTION CONTRE LE GEL D'UN SYSTÈME EMBARQUÉ DANS UN VÉHICULE AUTOMOBILE**
FROSTSCHUTZVERFAHREN UND -VORRICHTUNG EINES BORDEIGENEN SYSTEMS IN EINEM KRAFTFAHRZEUG
FROST PROTECTION METHOD AND DEVICE OF AN ON-BOARD-SYSTEM IN A MOTOR VEHICLE

(30) Priorité: 13.05.2015 FR 1554296
(43) Date de publication de la demande: 16.11.2016
(73) Titulaire: PSA Automobiles SA, 78300 Poissy (FR)
(72) Inventeur: STRUB, Emmanuel, 70250 RONCHAMP (FR); BARON, Damien, 92400 COURBEVOIE (FR); DEZALOT, Sylvain, 78000 VERSAILLES (FR)

(56) Documents cités:
- DE-A1-102007 000 538
- DE-A1-102007 035 983
- DE-A1-102012 110 985
- JP-A- 2012 137 037
- US-A1- 2013 269 321

## Description

La présente invention concerne un procédé de protection contre le gel d'un système embarqué dans un véhicule automobile, ce système délivrant un liquide susceptible de geler dans des conditions de température extérieure extrêmes.

De manière générale, la présente invention s'inscrit dans le cadre de l'adaptation du besoin fonctionnel d'un véhicule automobile au juste nécessaire pour éviter d'endommager des éléments d'un système utilisant un liquide pouvant geler dans des conditions de température extérieure très froide.

Le principe à la base de la présente invention est d'anticiper et de reconnaître le risque d'être en présence d'une vague de froid pour alors inhiber l'activation des fonctions non robustes aux conditions extrêmes d'un système délivrant un liquide dans un véhicule automobile, le liquide de ce système pouvant geler à ces conditions extrêmes.

Dans ce qui va suivre, la présente invention va être décrite dans le contexte d'un système d'injection d'un agent réducteur dans la ligne d'échappement d'un véhicule automobile dans le cadre d'une réduction catalytique sélective ou RCS aussi connue sous la dénomination anglaise de SCR, l'agent réducteur étant le liquide susceptible de geler. Dans ce cas spécifique, le but de la présente invention est de protéger les divers composants du système d'injection lors de trajets du véhicule effectués en climat très froid, la dépollution par réduction catalytique sélective étant alors peu efficace.

Il est cependant à garder à l'esprit que d'autres systèmes d'injection d'un quelconque liquide pouvant geler pourraient bénéficier d'un procédé de protection tel que le définit la présente invention. Ainsi la présente invention peut s'appliquer à tout système d'injection d'un liquide pouvant présenter un risque d'encrassement, de bouchage ou de blocage quelconque de sa canalisation d'alimentation du liquide par solidification du liquide.

Dans un système RCS, l'agent liquide est un agent de dépollution destiné à être introduit en dose prédéfinie et par injections consécutives dans un ensemble qui peut être une ligne d'échappement d'un véhicule automobile. L'ajout de cet agent de dépollution effectue le traitement des oxydes d'azote NOx présents dans la ligne d'échappement du moteur thermique d'un véhicule automobile.

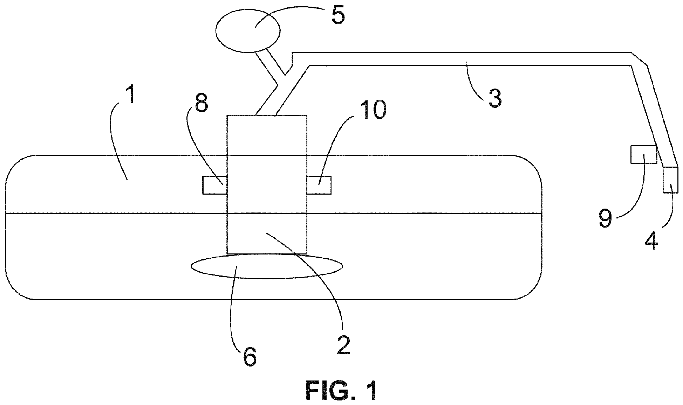

L'agent réducteur RCS est fréquemment de l'ammoniac ou un précurseur de l'ammoniac, par exemple de l'urée ou un dérivé de l'urée. Un exemple de système d'injection d'un liquide, pouvant être un agent réducteur RCS, est montré à la figure 1. Un tel système d'injection présente typiquement un réservoir 1 contenant une quantité d'agent liquide, une pompe 2 pour l'alimentation en agent liquide d'un ensemble non montré à la figure, cet ensemble pouvant être la ligne d'échappement d'un véhicule automobile.

L'alimentation est faite par une canalisation 3 dont une première extrémité est raccordée au réservoir 1 par la pompe 2 et la seconde extrémité raccordée à un injecteur 4 débouchant sur l'ensemble à alimenter.

Accessoirement, au moins un élément chauffant 10 peut être prévu dans le réservoir 1. De même, un capteur de température 8 peut être prévu dans le réservoir 1 pour mesurer la température de l'agent liquide que le réservoir 1 contient. Une jauge d'agent liquide peut aussi être avantageusement prévue dans le réservoir 1.

De manière facultative et non obligatoire, un accumulateur d'agent liquide, non montré à la figure 1, peut être raccordé à la canalisation 3 en étant disposé entre la pompe 2 et l'injecteur 4. Cet accumulateur sert alors au stockage temporaire d'une dose d'agent liquide en présentant une contenance plus faible que le réservoir 1, la contenance de l'accumulateur équivalant sensiblement à une dose d'agent liquide à injecter dans l'ensemble à intervalles de temps réguliers. Le système d'injection peut disposer aussi d'un capteur de pression 5 qui mesure la pression régnant dans la canalisation 3.

Il n'est pas rare que la canalisation 3 se bouche. Ceci peut se faire, par exemple, par encrassement interne de la canalisation 3 et/ou de l'injecteur 4 et plus particulièrement par gel de l'agent liquide contenu dans la canalisation 3. En effet, par exemple, une solution aqueuse d'urée en tant qu'agent liquide peut geler à une température inférieure ou sensiblement égale à -10°C. L'agent réducteur contenant de l'urée le plus utilisé dans un système RCS est connu sous le nom de AdBlue® et son point de gel est à -11 °C.

De ce fait, il convient de purger régulièrement la canalisation 3 et/ou l'injecteur 4 du système d'injection et avantageusement aussi de prévoir un élément de chauffe 10 de l'agent liquide dans le réservoir 1. En addition ou en alternative, c'est par exemple la canalisation 3 qui peut être une canalisation chauffante. Ainsi, dans le cas où l'ensemble à alimenter en agent liquide est une ligne d'échappement d'un véhicule automobile, la canalisation peut se boucher pendant l'arrêt du véhicule automobile, notamment en cas de gel de l'agent réducteur liquide.

En climat froid, les éléments chauffants prévus dans le système RCS permettent de dégeler l'agent réducteur et le système peut donc fonctionner. Une fois que l'agent réducteur liquide est dégelé, ce qui pour un mélange d'urée nécessite environ 20 minutes à -15°C, et que les conditions thermiques et débit des gaz d'échappement sont favorables, le système RCS remplit la canalisation 3 d'agent réducteur et la maintient en pression de fonctionnement à 5-6 bars pour tout le trajet du véhicule.

A l'issue du trajet, le système RCS réaspire l'agent réducteur à base d'urée contenu dans l'injecteur et la canalisation 3 jusque dans le réservoir pour protéger ces éléments du risque de casse lié à l'expansion de l'agent réducteur quand il gèle lors de l'arrêt du véhicule. Ceci correspond à une phase de purge.

La purge de la canalisation 3, alors nécessaire, s'effectue par aspiration des gaz d'échappement dans la canalisation 3, ceci particulièrement quand le système ne comporte qu'une seule canalisation 3 reliant le réservoir 1 à l'injecteur 4, cette aspiration étant créée par le fonctionnement de la pompe 2 dans le sens inverse du sens de son fonctionnement usuel ou par tout autre système de vannes permettant d'inverser le flux dans la canalisation 3.

En alternative ou en complément de cette aspiration de gaz d'échappement dans la canalisation 3, il est aussi possible de créer une aspiration d'air extérieur dans la canalisation 3, cette aspiration étant réalisée par ouverture d'une vanne 9 avantageusement prévue vers l'extrémité de la canalisation 3 portant l'injecteur 4. Ceci peut être avantageux quand les gaz d'échappement sont encore trop chauds, un mélange avec de l'air ambiant ou même leur remplacement par de l'air empêchant une trop forte montée de température dans la canalisation 3 et ainsi la dégradation d'éléments du système RCS.

En présence d'une vague de froid exceptionnelle et suivant les conditions de roulage, l'agent réducteur peut cependant regeler pendant le roulage et donc endommager définitivement les composants du système RCS qui ne sont pas conçus pour tenir au regel en roulant. Cela vaut en particulier pour l'injecteur RCS. La fonction de purge en roulant permet de retirer l'agent réducteur des éléments du système RCS sensibles au gel mais cette purge encrasse le système avec les gaz d'échappement aspirés pendant le roulage.

Des améliorations ont été apportées pour des systèmes RCS pour augmenter leur tenue aux basses températures usuelles en Europe. En particulier, des essais véhicules ont permis de cerner les conditions de roulage et de vitesse à partir desquelles le système est exposé au risque de regel de l'agent réducteur en roulant.

Le document US-A-2013/0269321 aborde la problématique du gel d'un agent réducteur dans un système RCS dans l'injecteur avant un redémarrage moteur, même si la température de l'injecteur est supérieure à -11°C. En effet, le gel peut être dû à une concentration élevée d'urée lors du précédent trajet sans avoir effectué une purge de la canalisation du système RCS à l'arrêt du moteur. De l'agent réducteur vaporisé lors du précédent parcours peut se solidifier à nouveau en se transformant en gel au prochain démarrage. Selon ce document, il est prévu de prendre une mesure de la température ambiante à l'arrêt du véhicule et de la mémoriser. Cette mesure de température ambiante à l'arrêt du véhicule et la mesure d'un gradient de température à l'injecteur d'agent réducteur permettent d'estimer les risques de regel d'agent réducteur dans le système lors de l'arrêt.

On connait encore du document DE102007035983A1 un procédé de protection contre le gel d'un système embarqué dans un véhicule automobile et du document DE102012110985A1 un procédé de mesure d'une température extérieure à un pas prédéfini et sa mémorisation.

Le problème de la présente invention est d'évaluer ou d'anticiper un gel ou un regel aux premiers instants de roulage du véhicule automobile lors d'un environnement de grand froid.

Pour atteindre cet objectif, il est prévu selon l'invention un procédé de protection contre le gel d'un système embarqué dans un véhicule automobile contenant en son intérieur un agent liquide et, dans un premier état dit actif, délivrant l'agent liquide séquentiellement quand le véhicule automobile effectue un trajet, l'agent liquide étant susceptible de geler à une température (prédéterminée) de gel, le système, dans un second état dit inactif, cessant de délivrer l'agent liquide après l'arrêt du véhicule, le procédé présentant les étapes suivantes :
- mesure avec un pas prédéfini entre deux points de mesure consécutifs puis mémorisation de valeurs de température extérieure aux divers points de mesure lors du dernier parcours du véhicule,
- lors d'un redémarrage du véhicule succédant au dernier parcours, sélection d'une valeur de température extérieure (Tsélec) lors du dernier parcours (DP) ou d'une valeur fonction d'au moins une valeur de température extérieure mémorisée lors du dernier parcours (DP) et comparaison de la valeur mémorisée sélectionnée avec la température de gel,
- si la valeur mémorisée sélectionée ou la valeur fonction d'au moins une valeur de température extérieure mémorisée est supérieure à la température prédéterminée de gel, activation du système dans son premier état,
- si la valeur mémorisée sélectionée ou la valeur fonction d'au moins une valeur de température extérieure mémorisée est inférieure à la température prédéterminée de gel, détection d'un risque de gel de l'agent liquide et maintien ou passage dans le second état inactif du système pendant une durée prédéterminée,
- après écoulement de la durée prédéterminée, mesure de la température extérieure alors, avec, si la température extérieure est inférieure à la température prédéterminée de gel, maintien inactif du système tant que la température extérieure est inférieure à ladite température de gel.

L'effet technique est, lors de conditions extérieures froides, de mémoriser dans quelles conditions thermiques extérieures s'est déroulé le dernier parcours du véhicule pour qu'au prochain trajet, l'activation du système soit retardée si les conditions très froides sont confirmées. L'activation du système ne sera réalisée ensuite que si la température extérieure au début du roulage n'est pas trop froide pour ainsi éviter son activation inadaptée aux conditions climatiques qui pourrait conduire à un endommagement du système ou pour certains systèmes à une purge en roulant.

On comprend au sens de l'invention par « trajet » le fait que le véhicule est mobile, en étant mû par un groupe moto propulseur utilisant un moteur, notamment thermique comme explicité plus lois, ou que le véhicule est immobile, au moins sur certaines périodes du trajet, mais avec le moteur pas coupé : le trajet peut donc être constitué d'une succession de périodes où le véhicule roule ou est immobile, avec le moteur tournant. A contrario, on comprend au sens de l'invention par arrêt du véhicule, l'arrêt du véhicule et du moteur de son groupe moto-propulseur.

Avantageusement, pour chaque point de mesure, il est procédé à la mémorisation de la valeur de température extérieure effective pour ce point de mesure et à la mémorisation de n valeurs de température extérieure mesurées pour chaque point de mesure respectif des n points de mesure précédents.

Avantageusement, la valeur fonction d'au moins une température extérieure sélectionnée lors du dernier parcours est une moyenne avec ou sans coefficient de pondération des n températures extérieures mémorisées au point de mesure correspondant à l'arrêt du véhicule automobile.

Avantageusement, la valeur de température extérieure sélectionnée est la température de l'avant dernier point de mesure précédant celui correspondant à l'arrêt du véhicule automobile.

Avantageusement, lors du redémarrage, le système est chauffé pendant la durée prédéterminée de maintien dans le second état inactif.

Avantageusement, la durée prédéterminée de maintien dans le second état inactif, le pas prédéfini de prise de mesures et le nombre de valeurs de température extérieure mémorisées sont calibrables.

L'invention concerne aussi un ensemble d'un dispositif de commande et d'un système embarqué dans un véhicule automobile contenant en son intérieur un agent liquide, le système délivrant l'agent liquide séquentiellement quand le véhicule automobile effectue un trajet et cessant de délivrer l'agent liquide après l'arrêt du véhicule, tel qu'il est protégé par un tel procédé, le dispositif de commande comprenant des moyens de mesure de la température extérieure, des moyens de mémorisation des valeurs de température extérieure mesurées, des moyens de sélection d'au moins une valeur de température extérieure mémorisée ou d'une valeur fonction d'au moins une valeur de température extérieure mémorisée, des moyens de comparaison de ladite au moins une valeur mémorisée sélectionnée avec une température de gel et des moyens de commande en état actif ou inactif du système.

Avantageusement, le système est un système de réduction catalytique sélective comprenant un agent réducteur liquide à base d'urée. Le fait de maintenir inactif le système à très basse température n'est pas désavantageux étant donné que la réduction catalytique sélective n'est pas nécessaire et serait d'un très mauvais rendement.

L'invention concerne enfin un véhicule automobile comprenant un moteur thermique, une ligne d'échappement des gaz en sortie du moteur avec au moins un moyen de dépollution des gaz d'échappement par ajout d'un agent liquide dans la ligne d'échappement et un contrôle moteur régissant les paramètres du moteur thermique et dudit au moins un moyen de dépollution, et qui comprend au moins un tel ensemble d'un dispositif de commande et d'un système, le système formant ledit au moins un moyen de dépollution, le contrôle moteur intégrant le dispositif de commande dudit système.

Avantageusement, le véhicule comprend un capteur de température extérieure, de préférence logé dans un rétroviseur extérieur, des moyens de commande du capteur par le contrôle moteur pour la prise d'une mesure de température par le capteur et des moyens de transmission des mesures du capteur au contrôle moteur.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'un système d'injection d'une dose prédéterminée d'un agent liquide dans un ensemble, le gel de l'agent liquide lors d'un nouveau démarrage pouvant être contrôlé conformément au procédé selon la présente invention, le système d'injection étant un système de réduction catalytique sélective à cette figure,
- la figure 2 illustre un diagramme des points de n mesures des températures extérieures lors du dernier parcours du véhicule muni d'un système délivrant un liquide pouvant être contrôlé conformément au procédé selon l'invention,
- la figure 3 illustre un diagramme du maintien inactif du système délivrant un liquide pouvant être contrôlé conformément au procédé selon l'invention, ceci pendant une durée déterminée quand l'agent liquide contenu dans le système est susceptible de geler.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier les dimensions des différents éléments illustrés ne sont pas représentatives de la réalité.

La figure 1 a déjà été détaillée dans la partie introductive de la présente demande.

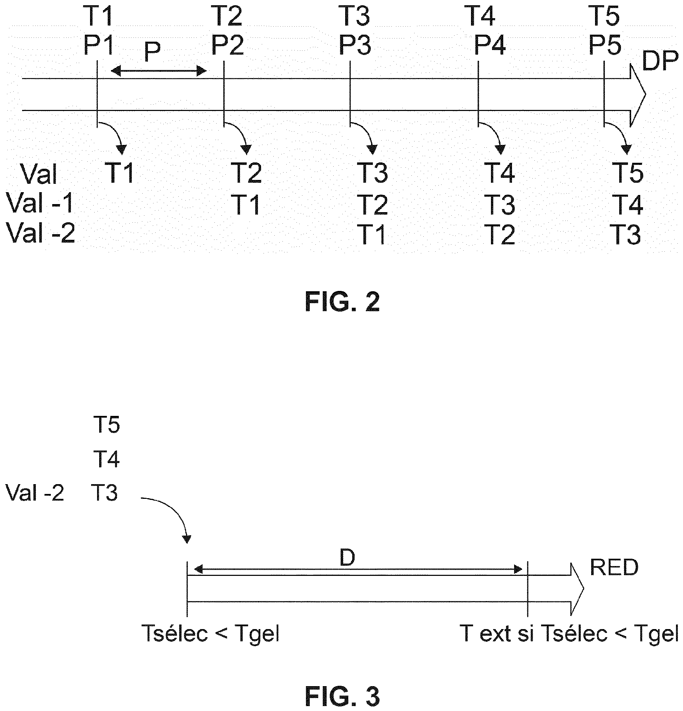

En se référant à toutes les figures et plus particulièrement aux figures 2 et 3, la présente invention concerne un procédé de protection contre le gel d'un système embarqué dans un véhicule automobile contenant en son intérieur un agent liquide. Ce système peut par exemple être un système de réduction catalytique sélective ou système RCS mais pas uniquement.

Dans ce système, dans un premier état dit actif du système, l'agent liquide est délivré séquentiellement quand le véhicule automobile effectue un trajet. Cet agent liquide, par exemple un agent réducteur à base d'urée, est susceptible de geler à une température prédéterminée de gel Tgel, notamment quand il est délivré séquentiellement. Cette température de gel est propre aux constituants du liquide et peut par exemple être de moins 10°C si le liquide est composé d'urée, comme c'est le cas dans un système RCS. Il peut aussi geler vers les 0°C si le liquide est composé majoritairement d'eau.

Un tel système est conçu pour que, dans un second état dit inactif, il cesse de délivrer l'agent liquide après l'arrêt du véhicule. Ceci est particulièrement pertinent quand l'agent liquide sert à la dépollution des gaz d'échappement issus d'un moteur thermique du véhicule automobile.

En se référant plus particulièrement à la figure 2, le procédé comprend une mesure à un pas P prédéfini entre deux points de mesure consécutifs de x points P1 à P5. Cette mesure est suivie d'une mémorisation de valeurs T1 à T5 de température extérieure régnantes aux divers points P1 à P5 de mesure lors du dernier parcours DP du véhicule. A la figure 2, il est montré cinq points pour les x points possibles de mesure de température extérieure, ce qui n'est pas limitatif.

En se référant plus particulièrement à la figure 3, lors d'un redémarrage RED du véhicule succédant au dernier parcours référencé DP à la figure 2, il est procédé à une sélection d'une valeur de température extérieure mémorisée Tsélec ou d'une valeur fonction d'au moins une valeur de température extérieure mémorisée lors du dernier parcours (DP).

Ceci peut être fait au moment du redémarrage ou avant le redémarrage. Des exemples de sélection d'une valeur de température extérieure mémorisée Tsélec ou d'une valeur fonction d'au moins une valeur de température extérieure mémorisée vont être ultérieurement explicités.

Il est ensuite procédé à la comparaison de la valeur mémorisée sélectionnée Tsélec avec la température prédéterminée de gel Tgel. Si la valeur mémorisée sélectionnée Tsélec est supérieure à la température prédéterminée de gel Tgel, il n'apparaît aucun risque de gel de l'agent liquide et il est procédé à une activation du système dans son premier état dit actif, donc à une activation en fonctionnement normal.

Si la valeur mémorisée sélectionnée Tsélec est inférieure à la température prédéterminée de gel Tgel, il est détecté un risque de gel de l'agent liquide et il est procédé au maintien dans le second état inactif du système pendant une durée D prédéterminée. Pendant cette durée D prédéterminée, il peut être effectué en chauffant les éléments du système et en conséquence l'agent liquide qu'ils contiennent. Ceci peut être fait par l'élément chauffant précédemment référencé 10 à la figure 1. Ainsi, lors du redémarrage RED, le système peut être chauffé pendant la durée D prédéterminée de maintien dans le second état inactif.

Après écoulement de la durée D prédéterminée, il est procédé à une mesure de la température extérieure Text régnante alors pendant ce parcours de redémarrage RED. Si la température extérieure Text est inférieure à la température prédéterminée de gel Tgel, le système est maintenu inactif tant que la température extérieure Text n'est pas supérieure à la température prédéterminée de gel Tgel. En effet, le risque est alors grand que le liquide ne gèle quand délivré par le système.

Ainsi, la présente invention utilise une fonction de mémorisation de l'historique climatique du dernier roulage afin d'adapter le besoin fonctionnel du véhicule au juste nécessaire pour ne pas solliciter les éléments du système dans des conditions extrêmes susceptibles de faire geler l'agent liquide, ce qui pourrait endommager certains des éléments du système.

Il est aussi possible de mémoriser un gradient de température extérieure ou des températures extérieures le long du dernier parcours, puis de les exploiter lors du prochain redémarrage pour évaluer un risque de gel de l'agent liquide. Ceci permet d'évaluer et d'anticiper un gel aux premiers instants de roulage du véhicule après redémarrage, en particulier lorsque le véhicule est stationné dans un garage chauffé et sort brutalement dans un climat de grand froid, ce qui pourrait alors provoquer le gel de l'agent liquide.

En se référant à la figure 2 qui montre de manière non limitative cinq points P1 à P5 de mesures espacés d'un pas P, par exemple de cinq cent mètres, pour chaque point P1 à P5 de mesure, il est procédé à la mémorisation de la valeur de température extérieure effective pour ce point P1 à P5 de mesure et à la mémorisation de n valeurs T1 à T5 de température extérieure mesurées pour chaque point P1 à P5 de mesure respectif des n points P1 à P5 de mesure précédents. N peut ne pas être égal à x comme précédemment mentionné. Par exemple à la figure 2, le nombre total de points x de mesures est égal à cinq tandis que le nombre n de mesures de température mémorisées est au plus égal à trois.

Il est ainsi procédé à la formation d'une pile qui atteint au plus n mesures. A la figure 2, n est égal à 3. Une pile à trois mesures comme montré à la figure 2 comprend la dernière mesure effectuée Val, l'avant dernière mesure effectuée Val-1 au point de mesure précédent et l'antépénultième mesure effectuée Val-2 au point de mesure antépénultième ou avant-avant-dernier.

Pour une pile de trois mesures, la pile est complète à partir de la troisième mesure avec suppression de la plus ancienne mesure effectuée et incorporation de la nouvelle mesure effectuée à chaque nouveau point de mesure. Une telle pile peut cependant comprendre plus de trois mesures.

Dans un mode préférentiel de réalisation de l'invention, la valeur fonction d'au moins une température extérieure sélectionnée lors du dernier parcours (DP) est une moyenne avec ou sans coefficient de pondération des n températures extérieures mémorisées au point P5 de mesure correspondant à l'arrêt du véhicule automobile.

Dans un autre mode préférentiel de réalisation de l'invention, la valeur de température mémorisée sélectionnée référencée Tsélec à la figure 3 est la température T3 de l'avant dernier point P3 de mesure précédant celui P5 correspondant à l'arrêt du véhicule automobile, cet avant dernier point P3 de mesure avant le point de mesure P5 étant aussi l'antépénultième point de mesure de la série de points P1 à P5, le point P5 étant le dernier point de mesure, P4 l'avant dernier point et P3 l'avant avant dernier ou antépénultième point.

Ainsi dans des modes de l'invention, à l'arrêt du véhicule après le dernier parcours DP, il est constitué un stockage de plusieurs valeurs de température T1 à T5 formant une pile qui est mémorisée au moins partiellement pour pouvoir être lue au démarrage suivant.

Lors du démarrage DP suivant, il peut être procédé par exemple à la sélection d'une valeur de température mémorisée Tsélec, par exemple la valeur Val - 2. Si Tsélec est inférieure à un seuil de température formé par la température de gel du liquide, par exemple moins 10°C, la prise en compte de la température extérieure ne sera faite qu'après que le véhicule ait démarré depuis une durée D déterminée, par exemple trois minutes. Cette fonctionnalité ne modifie pas la stratégie actuelle de chauffe des composants du système, si une telle stratégie est opérationnelle, stratégie qui est intégralement préservée.

La présente invention concerne aussi un ensemble d'un dispositif de commande et d'un système embarqué dans un véhicule automobile contenant en son intérieur un agent liquide en délivrant l'agent liquide séquentiellement quand le véhicule automobile effectue un trajet et en cessant de délivrer l'agent liquide après l'arrêt du véhicule. Ce système à agent liquide et son dispositif de commande permettent de mettre en oeuvre le procédé de protection contre le gel précédemment décrit.

Pour ce faire, le dispositif de commande comprend des moyens de mesure de la température extérieure, des moyens de mémorisation des valeurs T1 à T5 de température extérieure mesurées, des moyens de sélection d'au moins une valeur de température extérieure mémorisée Tsélec ou d'une valeur fonction d'au moins une valeur de température extérieure mémorisée, des moyens de comparaison de ladite au moins une valeur mémorisée sélectionnée Tsélec avec une température prédéterminée de gel Tgel et des moyens de commande en état actif ou inactif du système.

Comme précédemment mentionné, le système à agent liquide peut être un système de réduction catalytique sélective comprenant un agent réducteur liquide à base d'urée. Il peut aussi être, sans que cela soit limitatif, un autre système de dépollution des gaz d'échappement, l'agent liquide étant versé directement ou indirectement dans la ligne d'échappement du véhicule automobile. La présente invention ne modifie ni le fonctionnement, ni la réactivité actuelle d'un système RCS pour la dépollution en oxydes d'azote.

Ainsi, la présente invention concerne un véhicule automobile présentant un moteur thermique, une ligne d'échappement des gaz en sortie du moteur avec au moins un moyen de dépollution des gaz d'échappement par ajout d'un agent liquide dans la ligne d'échappement et un contrôle moteur régissant les paramètres du moteur thermique et dudit au moins un moyen de dépollution. Le véhicule automobile comprend au moins un ensemble d'un dispositif de commande et d'un système tel que précédemment décrit. Le système forme au moins un moyen de dépollution et le contrôle moteur intègre le dispositif de commande dudit système.

Le contrôle moteur mémorise la température extérieure lors de pas régulier au cours du trajet, par exemple tous les 500 mètres en formant une pile de n valeurs de températures pour n points de mesure consécutifs, cette pile étant réactualisée tant que le véhicule roule.

Le véhicule automobile peut comprendre un capteur de température extérieure logé dans un rétroviseur extérieur, des moyens de commande du capteur par le contrôle moteur pour la prise d'une mesure de température par le capteur et des moyens de transmission des mesures du capteur au contrôle moteur pour l'édification de la pile de valeurs de température extérieure.

Ceci est avantageux étant donné qu'un capteur de température extérieure est fréquemment intégré dans le rétroviseur extérieur pour de nombreux véhicules.

Avec un tel procédé de protection, il est possible d'activer le système à agent liquide, avantageusement mais pas uniquement un système RCS, au juste nécessaire. La situation de vie visée par la présente invention est le démarrage du véhicule en milieu confiné du type garage, parking souterrain ou équivalent où la température est beaucoup plus clémente qu'à l'extérieur avec risque que l'agent liquide ne gèle au début du parcours du véhicule à l'extérieur lors d'un maintien actif du système, ce qui pour un système RCS pourrait provoquer une casse de l'injecteur d'agent réducteur.

En climat grand froid, pour les conducteurs à la conduite la moins favorable, ce sont trois cents purges en roulant par an qui sont ainsi évitées. Ce calcul est basé sur un hiver moyen au nord de l'Europe en prenant en compte une non activation du système, notamment un système RCS, par exemple dès que la température extérieure est inférieure à -20°C.

Comme selon la présente invention, le système à agent liquide est activé au juste nécessaire, les risques induits par la purge en roulant en réaspirant les gaz d'échappement, comme il a été mentionné dans la partie introductive de la présente demande, sont fortement réduits.

Avec un tel procédé et un tel ensemble regroupant dispositif de commande et système à agent liquide, un capteur de température de l'agent liquide dans le système, par exemple un réservoir d'agent liquide, pourrait devenir superflu.

Pour un système RCS, la présente invention permet de fortement limiter le besoin de purge en roulant car elle permet d'activer le système seulement dans des conditions thermiques extérieures beaucoup mieux maîtrisées.

L'invention n'est nullement limitée aux modes de réalisation décrits et illustrés qui n'ont été donnés qu'à titre d'exemples.

## Revendications

1. Procédé de protection contre le gel d'un système embarqué dans un véhicule automobile contenant un agent liquide et, dans un premier état dit actif, délivrant l'agent liquide quand le véhicule automobile effectue un trajet, l'agent liquide étant susceptible de geler à une température de gel (Tgel), le système, dans un second état dit inactif, cessant de délivrer l'agent liquide après l'arrêt du véhicule, le procédé comprenant les étapes suivantes :
- mesure, à un pas (P) prédéfini entre deux points (P1 à P5) de mesure consécutifs, puis mémorisation de valeurs (T1 à T5) de température extérieure aux divers points (P1 à P5) de mesure lors du dernier parcours (DP) du véhicule,
- lors d'un redémarrage (RED) du véhicule succédant au dernier parcours (DP), sélection d'une valeur de température extérieure mémorisée (Tsélec) lors du dernier parcours (DP) ou d'une valeur fonction d'au moins une valeur de température extérieure mémorisée lors du dernier parcours (DP) et comparaison de la valeur mémorisée sélectionnée (Tsélec) ou de la valeur fonction d'au moins une valeur de température extérieure mémorisée avec la température de gel (Tgel),
- si la valeur mémorisée sélectionnée (Tsélec) ou de la valeur fonction d'au moins une valeur de température extérieure mémorisée est supérieure à la température de gel (Tgel), activation du système dans son premier état,
- si la valeur mémorisée sélectionnée (Tsélec) ou de la valeur fonction d'au moins une valeur de température extérieure mémorisée est inférieure à la température de gel (Tgel), détection d'un risque de gel de l'agent liquide et maintien ou passage dans le second état inactif du système pendant une durée (D) prédéterminée,
- après écoulement de la durée (D) prédéterminée, mesure de la température extérieure (Text) alors, avec, si la température extérieure (Text) est inférieure à la température de gel (Tgel), maintien à l'état inactif du système tant que la température extérieure (Text) reste inférieure à la température de gel (Tgel).

2. Procédé selon la revendication 1, dans lequel, pour chaque point (P1 à P5) de mesure, il est procédé à la mémorisation de la valeur de température extérieure effective pour ce point (P1 à P5) de mesure et à la mémorisation de n valeurs (T1 à T5) de température extérieure mesurées pour chaque point (P1 à P5) de mesure respectif des n points (P1 à P5) de mesure précédents.

3. Procédé selon la revendication 2, dans lequel la valeur fonction d'au moins une température extérieure sélectionnée lors du dernier parcours (DP) est une moyenne avec ou sans coefficient de pondération des n températures extérieures mémorisées au point (P5) de mesure correspondant à l'arrêt du véhicule automobile.

4. Procédé selon la revendication 2, dans lequel la valeur de température mémorisée sélectionnée (Tsélec) est la température (T3) de l'avant dernier point (P3) de mesure précédant celui (P5) correspondant à l'arrêt du véhicule automobile.

5. Procédé selon l'une quelconque des revendications précédentes, dans lequel, lors du redémarrage (RED), le système est chauffé pendant la durée (D) prédéterminée de maintien dans le second état inactif.

6. Procédé selon l'une quelconque des revendications précédentes, dans lequel la durée (D) prédéterminée de maintien dans le second état inactif, le pas (P) prédéfini entre les points (P1 à P5) de mesure et le nombre de valeurs (T1 à T5) de température extérieure mémorisées sont calibrables.

7. Ensemble d'un dispositif de commande et d'un système embarqué dans un véhicule automobile contenant un agent liquide, le système délivrant l'agent liquide séquentiellement quand le véhicule automobile effectue un trajet et cessant de délivrer l'agent liquide après l'arrêt du véhicule, **caractérisé en ce qu'**il est protégé par un procédé selon l'une quelconque des revendications précédentes, le dispositif de commande comprenant des moyens de mesure de la température extérieure, des moyens de mémorisation des valeurs (T1 à T5) de température extérieure mesurées, des moyens de sélection d'au moins une valeur de température extérieure mémorisée (Tsélec) lors du dernier parcours (DP) ou d'une valeur fonction d'au moins une valeur de température extérieure mémorisée lors du dernier parcours (DP), des moyens de comparaison de ladite au moins une valeur mémorisée sélectionnée (Tsélec) ou de ladite valeur fonction d'au moins une valeur de température extérieure mémorisée avec une température de gel (Tgel) et des moyens de commande en état actif ou inactif du système.

8. Ensemble selon la revendication 7, dans lequel le système est un système de réduction catalytique sélective comprenant un agent réducteur liquide, notamment à base d'urée.

9. Véhicule automobile comprenant un moteur thermique, une ligne d'échappement des gaz en sortie du moteur avec au moins un moyen de dépollution des gaz d'échappement par ajout d'un agent liquide dans la ligne d'échappement et un contrôle moteur régissant les paramètres du moteur thermique et dudit au moins un moyen de dépollution, **caractérisé en ce qu'**il comprend au moins un ensemble d'un dispositif de commande et d'un système selon l'une quelconque des deux revendications précédentes, le système formant ledit au moins un moyen de dépollution, le contrôle moteur intégrant le dispositif de commande dudit système.

10. Véhicule automobile selon la revendication 9, lequel comprend un capteur de température extérieure logé dans un rétroviseur extérieur, des moyens de commande du capteur par le contrôle moteur pour la prise d'une mesure de température par le capteur et des moyens de transmission des mesures du capteur au contrôle moteur.

## Patentansprüche

1. Frostschutzverfahren eines bordeigenen Systems in einem Kraftfahrzeug, das ein flüssiges Mittel enthält und, in einem ersten sogenannten aktiven Zustand, das flüssige Mittel abgibt, wenn das Kraftfahrzeug eine Fahrt ausführt, wobei das flüssige Mittel in der Lage ist, bei einer Gefriertemperatur (Tgel) zu gefrieren, wobei das System, in einem zweiten sogenannten inaktiven Zustand, die Abgabe des flüssigen Mittels nach dem Stillstand des Fahrzeugs einstellt, wobei das Verfahren die folgenden Schritte umfasst:
- Messung, in einem vorbestimmten Abstand (P) zwischen zwei aufeinanderfolgenden Messpunkten (P1 bis P5), dann Speicherung der Außentemperaturwerte (T1 bis T5) an verschiedenen Messpunkten (P1 bis P5) während der letzten Route (DP) des Fahrzeugs,
- bei einem Neustart (RED) des Fahrzeugs im Anschluss an die letzte Route (DP), Selektion eines während der letzten Route (DP) gespeicherten Außentemperaturwerts (Tselec) oder eines mindestens von einem während der letzten Route (DP) gespeicherten Außentemperaturwert abhängigen Werts und Vergleich des selektierten gespeicherten Werts (Tselec) oder eines mindestens von einem gespeicherten Außentemperaturwert abhängigen Werts mit der Gefriertemperatur (Tgel),
- Aktivierung des Systems in seinem ersten Zustand, wenn der selektierte gespeicherte Wert (Tselec) oder eines mindestens von einem gespeicherten Außentemperaturwert abhängigen Werts oberhalb der Gefriertemperatur (Tgel) liegt.
- Erkennung einer Gefahr des Einfrierens des flüssigen Mittels und Halten oder Übergang in den zweiten inaktiven Zustand des Systems während einer vorbestimmten Dauer (D), wenn der selektierte gespeicherte Wert (Tselec) oder eines mindestens von einem gespeicherten Außentemperaturwert abhängigen Werts unterhalb der Gefriertemperatur (Tgel) liegt,
- nach Ablauf der vorbestimmten Dauer (D), Messung der Außentemperatur (Text), dann, mit, wenn die Außentemperatur (Text) unterhalb der Gefriertemperatur (Tgel) liegt, Halten des inaktiven Zustands des Systems, so dass die Außentemperatur (Text) unterhalb der Gefriertemperatur (Tgel) bleibt.

2. Verfahren nach Anspruch 1, worin, für jeden Messpunkt (P1 bis P5) die Speicherung des Ist-Werts der Außentemperatur für diesen Messpunkt (P1 bis P5) und die Speicherung der n-Werte (T1 bis T5) der Außentemperatur, die für jeden jeweiligen Messpunkt (P1 bis P5) der vorhergehenden n-Messpunkte (P1 bis P5) gemessen wird, durchgeführt wird.

3. Verfahren nach Anspruch 2, worin der von mindestens einer während der letzten Route (DP) selektierten Außentemperatur abhängige Wert ein Mittelwert mit oder ohne Gewichtungskoeffizienten der, dem Stillstand des Kraftfahrzeugs entsprechend, am Messpunkt (P5) gespeicherten n-Außentemperaturen ist.

4. Verfahren nach Anspruch 2, worin der selektierte gespeicherte Temperaturwert (Tselec) die Temperatur (T3) des vorletzten Messpunkts (P3) ist, der demjenigen (P5) vorangeht, welcher dem Stillstand des Kraftfahrzeugs entspricht.

5. Verfahren nach einem der vorhergehenden Ansprüche, worin, beim Neustart (RED), das System während der vorbestimmten Dauer (D) zum Halten im zweiten inaktiven Zustand erhitzt wird.

6. Verfahren nach einem der vorhergehenden Ansprüche, worin die vorbestimmte Dauer (D) zum Halten im zweiten inaktiven Zustand, der zwischen zwei Messpunkten (P1 bis P5) vordefinierte Abstand (P) und die Anzahl der gespeicherten Außentemperaturwerte (T1 bis T5) kalibrierbar sind.

7. Anordnung einer Steuervorrichtung und eines bordeigenen Systems in einem Kraftfahrzeug, das ein flüssiges Mittel enthält, wobei das System das flüssige Mittel sequentiell abgibt, wenn das Kraftfahrzeug eine Fahrt ausführt und die Abgabe des flüssigen Mittels nach dem Stillstand des Fahrzeugs einstellt, **dadurch gekennzeichnet, dass** es durch ein Verfahren nach einem der vorhergehenden Ansprüche geschützt wird, wobei die Steuervorrichtung Mittel zur Messung der Außentemperatur, Mittel zur Speicherung der gemessenen Außentemperaturwerte (T1 bis T5), Mittel zur Selektion von mindestens einem während der letzten Route (DP) gespeicherten Außentemperaturwert (Tselec) oder von einem von mindestens einem während der letzten Route (DP) gespeicherten Außentemperaturwert abhängigen Wert, Mittel zum Abgleich des besagten mindestens einen selektierten gespeicherten Werts (Tselec) oder des mindestens von einem gespeicherten Außentemperaturwert abhängigen Werts mit einer Gefriertemperatur (Tgel) sowie Mittel zur Steuerung des Systems in den aktiven oder inaktiven Zustand umfasst.

8. Anordnung nach Anspruch 7, worin das System ein System der selektiven katalytischen Reduktion ist, das ein flüssiges Reduziermittel, insbesondere auf Harnstoffbasis, umfasst.

9. Kraftfahrzeug, das einen Verbrennungsmotor, eine Abgasleitung der Abgase eines Motors mit mindestens einem Reinigungsmittel der Abgase durch Zugabe eines flüssigen Mittels in die Abgasleitung und eine Motorsteuerung zur Regelung der Parameter des Verbrennungsmotors und des mindestens einen Reinigungsmittels umfasst, **dadurch gekennzeichnet, dass** es mindestens eine Anordnung einer Steuervorrichtung und eines Systems nach einem der vorhergehenden Ansprüche umfasst, wobei das System das mindestens eine Reinigungsmittel bildet, wobei die Motorsteuerung die Steuervorrichtung des Systems integriert.

10. Kraftfahrzeug nach Anspruch 9, das einen im Außenrückspiegel angeordneten Außentemperatursensor, Mittel zur Steuerung des Sensors durch die Motorsteuerung zur Messung der Temperatur durch den Sensor sowie Mittel zur Übertragung der Messungen des Sensors an die Motorsteuerung umfasst.

## Claims

1. Method for protecting against frost a system installed in a motor vehicle comprising a liquid agent and, in a first so-called active state, delivering the liquid agent when the motor vehicle is making a journey, the liquid agent being liable to freeze at a freezing temperature (Tfreeze), the system, in a second so-called inactive state, ceasing to deliver the liquid agent after the vehicle is stopped, the method comprising the following steps:
- measurement, at a predefined pitch (P) between two consecutive measurement points (P1 to P5), and then storage, of external temperature values (T1 to T5) at the various measurement points (P1 to P5) during the last journey (DP) of the vehicle,
- at the time of a restarting (RED) of the vehicle following the last journey (DP), selection of an external temperature value (Tselec) stored during the last journey (DP) or of a value that is a function of at least one external temperature value stored during the last journey (DP) and comparison of the selected stored value (Tselec) or of the value that is a function of at least one stored external temperature value with the freezing temperature (Tfreeze),
- if the selected stored value (Tselec) or of the value that is a function of at least one stored external temperature value is higher than the freezing temperature (Tfreeze), activation of the system in its first state,
- if the selected stored value (Tselec) or of the value that is a function of at least one stored external temperature value is lower than the freezing temperature (Tgel), detection of a risk of freezing of the liquid agent and maintenance of or passage into the second inactive state of the system for a predetermined period (D),
- after elapse of the predetermined period (D), measurement of the external temperature (Text) then, with, if the external temperature (Text) is lower than the freezing temperature (Tgel), maintenance of the system in the inactive state as long as the external temperature (Text) remains below the freezing temperature (Tgel).

2. Method according to claim 1, in which, for each measuring point (P1 to P5), the actual external temperature value for this measuring point (P1 to P5) is stored and n external temperature values (T1 to T5) measured for each respective measuring point (P1 to P5) of the preceding n measurement points (P1 to P5) are stored.

3. Method according to claim 2, in which the value that is a function of at least one external temperature selected during the last journey (DP) is a mean, with or without weighting coefficient, of the n external temperatures measured at the measurement point (P5) corresponding to the stoppage of the motor vehicle.

4. Method according to claim 2, in which the selected stored temperature value (Tselec) is the temperature (T3) of the penultimate measurement point (P3) preceding the one (P5) corresponding to the stoppage of the motor vehicle.

5. Method according to any of the preceding claims, in which, at the time of restarting (RED), the system is heated for the predetermined period (D) of maintenance in the second inactive state.

6. Method according to any of the preceding claims, in which the predetermined period (D) of maintenance in the second inactive state, the predefined pitch (P) between the measurement points (P1 to P5) and the number of external temperature values (T1 to T5) stored are calibratable.

7. Assembly consisting of a control device and a system installed in a motor vehicle containing a liquid agent, the system delivering the liquid agent sequentially when the motor vehicle makes a journey and ceasing to deliver the liquid agent after the stoppage of the vehicle, **characterised in that** it is protected by a method according to any of the preceding claims, the control device comprising means for measuring the external temperature, means for storing external temperature values (T1 to T5) measured, means for selecting at least one external temperature value (Tselec) stored at the time of the last journey (DP) or of a value that is a function of at least one external temperature value stored at the time of the last journey (DP), means for comparing said at least one selected stored value (Tselec) or said value that is a function of at least one stored external value with a freezing temperature (Tgel) and means for controlling the system in the active or inactive state.

8. Assembly according to claim 7, in which the system is a selective catalytic reduction system comprising a liquid reducing agent, in particular based on urea.

9. Motor vehicle comprising a combustion engine, an exhaust line for the gases discharged from the engine with at least one means for depolluting the exhaust gases by adding a liquid agent in the exhaust line and an engine control governing the parameters of the combustion engine and of said at least one depollution means, **characterised in that** it comprises at least one assembly consisting of control device and a system according to either of the preceding two claims, the system forming said at least one depollution means, the engine control integrating the control device of said system.

10. Motor vehicle according to claim 9, which comprises an external temperature sensor housed in an external rearview mirror, means for controlling the sensor by the engine control for the taking of a temperature measurement for the sensor and means for transmitting measurements from the sensor to the engine control.
